# EUROPÄISCHE PATENTSCHRIFT

(11) **EP 1 031 741 B1**
(45) Veröffentlichungstag und Bekanntmachung des Hinweises auf die Patenterteilung: **07.01.2004**
(21) Anmeldenummer: 00102216.9
(22) Anmeldetag: 10.02.2000
(51) Int. Cl.: F16B 35/06

(54) **Senkkopfschraube**
Countersunk head screw
Vis à tête conique

(30) Priorität: 23.02.1999 DE 29903231 U
(43) Veröffentlichungstag der Anmeldung: 30.08.2000
(73) Patentinhaber: A-Z Ausrüstung und Zubehör GmbH & Co. KG, 45525 Hattingen (DE)
(72) Erfinder: Dicke, Robert, 58256 Ennepetal (DE)
(74) Vertreter: Patentanwälte Dr. Solf & Zapf

(56) Entgegenhaltungen:
- EP-A- 0 705 987
- DE-U- 29 600 065
- DE-U- 29 811 536
- US-A- 5 516 248

## Beschreibung

Die Erfindung betrifft eine Senkkopfschraube mit einem Kopf, mit einem Schaft und mit einem sich zumindest teilweise über den Schaft erstreckenden Gewinde, wobei der Kopf eine zumindest abschnittsweise in Richtung auf den Schaft konisch zulaufende Auflagefläche aufweist, wobei in einem oberen, dem Schaft abgewandten Bereich der Auflagefläche Rippen angeordnet sind.

Senkkopfschrauben können beispielsweise im Kopf eine Antriebsvertiefung, wie eine Schlitzung oder Kreuzschlitzung, zum Angriff eines Schraubendrehers aufweisen. Das freie Schaftende kann als Spitze ausgebildet sein. Insbesondere kann es sich um Senkkopfschrauben handeln, die auf das Material, in das sie eingeschraubt werden, eine gewindeformende oder gewindeschneidende Wirkung ausüben.

Vor allem bei Kurzschrauben, wie beispielsweise Beschlagschrauben, tritt bei Verwendung maschineller Schraubendreher das Problem auf dass Schrauben, nachdem sie ganz oder fast vollständig eingedreht sind, durchdrehen, d. h. sie drehen auf der Stelle, ohne tiefer in das Material einzudringen. Dadurch können die im Material geformten oder geschnittenen Gewindegänge zerstört werden.

In der EP 0 705 987 A1 ist eine Senkkopfschraube der gattungsgemäßen Art beschrieben, die im oberen, dem Schaft abgewandten Bereich Rippen trägt. Die Rippen weisen eine schneidenartige trianguläre Form auf, wodurch eine spanende Wirkung der Rippen auf ein Material hervorgerufen wird. Durch die spanende Wirkung der Rippen wird eine Bremswirkung erreicht, wenn die Rippen mit dem Material in Berührung gelangen.

Der Erfindung liegt die Aufgabe zu Grunde, eine Senkkopfschraube der gattungsgemäßen Art derart zu verbessern, dass die vorstehend genannten negativen Erscheinungen vermieden werden können.

Die Aufgabe wird dadurch gelöst, dass die Rippen als Bremsrippen derart ausgebildet sind, dass sie beim Eindrehen in ein Material, wie das einer Metalloberfläche eines Beschlags, durch eine erhöhte Flächenpressung zwischen dem Kopf und dem Material den Reibwiderstand erhöhen, wobei eine spanende Wirkung sowohl beim Ein- als auch beim Herausdrehen jedoch weitestgehend ausgeschlossen ist.

Die Bremsrippen bewirken beim Eindrehen einer erfindungsgemäßen Senkkopfschraube eine erhöhte Flächenpressung zwischen der Schraube und dem Material, in das sie eingedreht wird, beispielsweise an der Metalloberfläche eines Beschlags. Dadurch erhöht sich der Reibwiderstand und wirkt dem Eindrehmoment des Schraubendrehers entgegen, wodurch ein Durchdrehen der Schraube wirksam verhindert werden kann.

Weitere vorteilhafte Ausgestaltungsmerkmale der Erfindung sind in den Unteransprüchen sowie der folgenden Beschreibung enthalten.

Anhand zweier, in der Zeichnung dargestellter, bevorzugter Ausführungsbeispiele soll im Folgenden die Erfindung näher erläutert werden. Dabei zeigen:
- Fig. 1: in der Vorderansicht, eine vergrößerte Darstellung eines ersten Ausführungsbeispiels einer erfindungsgemäßen Senkkopfschraube,
- Fig. 2: die erste Ausführung einer erfindungsgemäßen Senkkopfschraube in einer entlang der Linie II-II in Fig. 1 geschnittenen Ansicht,
- Fig. 3: in der Vorderansicht, eine vergrößerte Darstellung eines zweiten Ausführungsbeispiels einer erfindungsgemäßen Senkkopfschraube,
- Fig. 4: die zweite Ausführung einer erfindungsgemäßen Senkkopfschraube in einer entlang der Linie IV-IV in Fig. 3 geschnittenen Ansicht.

In den verschiedenen Figuren der Zeichnung sind gleiche Teile mit denselben Bezugszeichen versehen, so daß sie in der Regel auch jeweils nur einmal beschrieben werden.

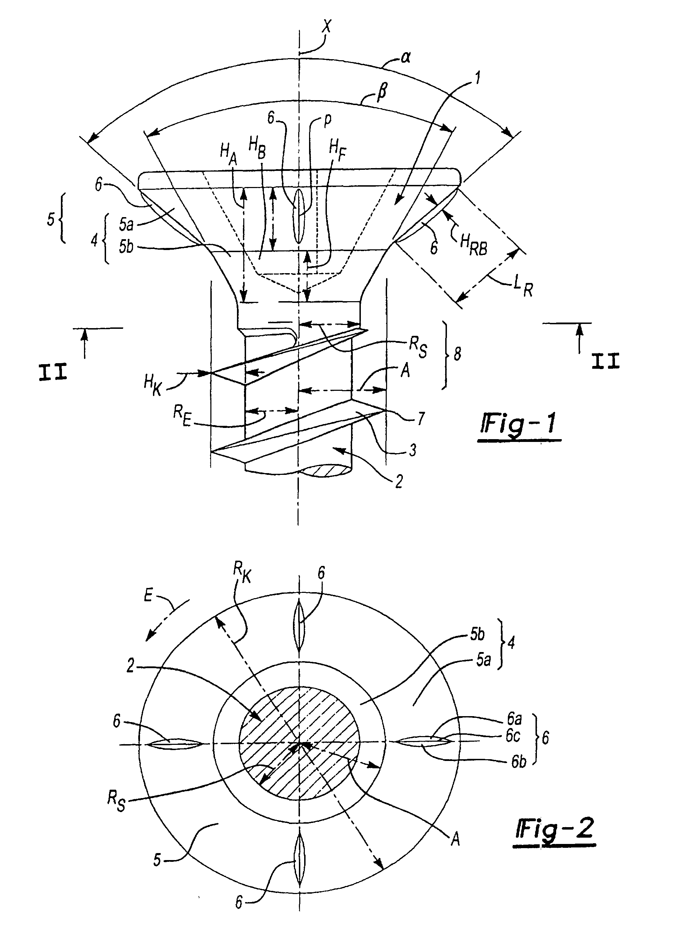

Wie Fig. 1 zeigt, weist eine erste Ausführung einer erfindungsgemäßen Senkkopfschraube einen Kopf 1, einen Schaft 2 und ein sich zumindest teilweise über den Schaft 2 erstreckendes Gewinde 3 auf. Der Kopf 1 wiederum weist eine zumindest abschnittsweise in Richtung auf den Schaft 2 konisch zulaufende Auflagefläche 4 auf. In einem oberen, dem Schaft 2 abgewandten Bereich 5 der Auflagefläche 4 sind Bremsrippen 6 angeordnet.

In der dargestellten Ausführung sind vier Bremsrippen 6 vorgesehen, es könnten aber auch mehr oder weniger sein, z.B. zwei, drei oder sechs.

Die konisch in Richtung auf den Schaft 2 zulaufende Auflagefläche 4 konvergiert in einem ersten, dem Schaft 2 abgewandten Kopfabschnitt 5a unter einem Winkel α von etwa 90° und in einem zweiten, dem Schaft 2 zugewandten Kopfabschnitt 5b unter einem Winkel β von etwa 50° bis 65°. Auf diese Weise wird erreicht, daß trotz relativ schmaler Form des Kopfes 1 im Kopf 1 genügend Raum für einen nicht näher bezeichneten, in Fig. 1 mit Strichlinien gezeichneten Kreuzschlitz zum Eingriff eines Schraubendrehers zur Verfügung steht. Der Bereich 5 der Auflagefläche 4, in dem die Bremsrippen 6 angeordnet sind, ist dabei der dem Schaft 2 abgewandte erste Kopfabschnitt 5a.

Der Bereich 5 der Auflagefläche 4, in dem die Bremsrippen 6 angeordnet sind, ist hinsichtlich seiner axialen Länge H_{B} nicht größer ist als etwa 60 Prozent einer axialen Länge H_{A} der konisch zulaufenden Auflagefläche 4. So wirken die Bremsrippen 6 vorteilhafterweise erst dann, nachdem die erfindungsgemäße Senkkopfschraube fast vollständig eingedreht ist. Ein Durchdrehen der Schraube wird dadurch verhindert, und im Material geformte oder geschnittene Gewindegänge können geschützt werden.

Die Bremsrippen 6 können - wie dargestellt - hinsichtlich ihrer Längserstreckung L_{R} auf Mantellinien der Auflagefläche 4 verlaufen, deren Projektion P auf einen durch den Kopf 1 verlaufenden Abschnitt der Schraubenlängsachse X-X der erfindungsgemäßen Schraube fällt. Auf diese Weise ist die Flächenpressung zwischen Schraube und Material erhöhende Wirkung der Bremsrippen 6 besonders groß.

Das Gewinde 3 weist eine Gewindekante 7 auf, die in einem Hauptbereich in Form einer Schraubenline in konstantem Abstand (Außenradius A des Gewindes 3) zu einem durch den Schaft 2 verlaufenden Abschnitt der Schraubenlängsachse X-X verläuft. Die Gewindekante 7 kann dabei in einem dem Kopf 1 zugewandten Endbereich 8 des Gewindes 3 eine abnehmende Höhe H_{K} aufweisen. Die Bremsrippen 6 können sich in einer hinsichtlich ihres Wirksamwerdens optimalen Anordnung - in der Unteransicht bzw. in der in Fig. 2 dargestellten Schnittdarstellung gesehen - in einem Ringbereich erstrecken, der außenseitig etwa durch einen äußeren Radius R_{K} des Kopfes 1 und innenseitig etwa durch den Außenradius A des Gewindes 3 ist.

Dabei ist es außerdem von Vorteil, wenn die Bremsrippen 6 über ihre Längserstreckung L_{R} eine veränderliche Höhe H_{RB} aufweisen. In der gezeigten Darstellung verläuft die Höhe H_{RB} der Bremsrippen 6 über der Längserstreckung L_{R} der Bremsrippen 6 von einem Wert Null relativ zur Auflagefläche 4 ausgehend bogenförmig und endet wiederum bei einem Wert Null relativ zur Auflagefläche 4. Der Maximalwert der Höhe H_{RB} der Bremsrippen 6 relativ zur Auflagefläche 4 kann dabei günstigerweise, insbesondere bei einem äußeren Radius R_{K} des Kopfes 1 von etwa 4 bis 5 mm, etwa 0,1 bis 0,2 mm betragen.

Die Bremsrippen 6 können - wie dargestellt - jeweils zwei Seitenflächen 6a, 6b von konvexer Form, insbesondere der Form eines Diskussegments, aufweisen. Die Seitenflächen 6a, 6b grenzen dabei an einer insbesondere zentrisch liegenden Kante 6c aneinander. Dadurch wird einerseits insbesondere beim Eindrehen ein hoher Reibwiderstand erreicht, eine spanende Wirkung der Bremsrippen sowohl beim Ein- als auch beim Herausschrauben einer erfindungsgemäßen Schraube jedoch weitestgehend ausgeschlossen.

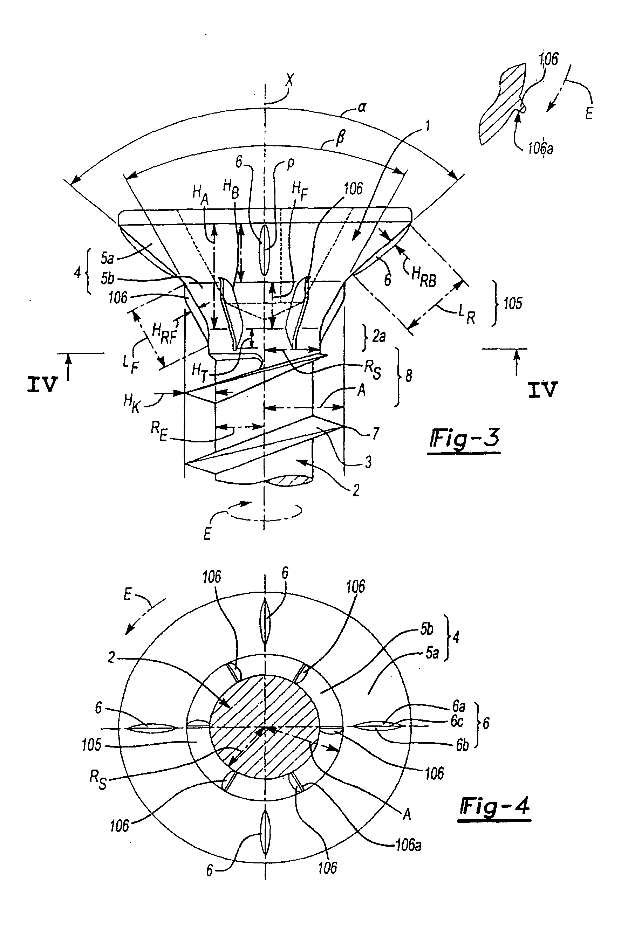

Eine zweite Ausführung einer erfindungsgemäßen Senkkopfschraube zeigen Fig. 3 und 4. Diese Ausführung unterscheidet sich hinsichtlich der Bremsrippen 6 nicht von der vorbeschriebenen ersten Ausführung. In einem unteren, dem Schaft 2 zugewandten Bereich 105 der Auflagefläche 4 sind jedoch zusätzlich Fräsrippen 106 angeordnet. Diese Fräsrippen 106 bewirken beim Eindrehen einer erfindungsgemäßen Senkkopfschraube eine Materialwegnahme, wodurch auch bei einer Senkkopfschraube, deren Kopf größer ist als der Norm entsprechend eine unerwünschte Materialzerstörung wirksam verhindert werden kann.

In der dargestellten Ausführung sind sechs Fräsrippen 106 vorgesehen, es könnten aber auch mehr oder weniger sein, z.B. drei, vier, acht oder mehr. Durch die Anzahl und Ausbildung der Fräsrippen 106 läßt sich die erwünschte Materialwegnahme beim Eindrehen einer erfindungsgemäßen Senkkopfschraube erhöhen oder senken und somit an das Material anpassen.

Der Bereich 105 der Auflagefläche 4, in dem die Fräsrippen 106 angeordnet sind, ist dabei der dem Schaft 2 zugewandte zweite Kopfabschnitt 5b.

Darüber hinaus erstrecken sich die Fräsrippen 106 bis in einen kopfnahen Bereich 2a des Schaftes 2, wo der Schaft 2 einen Radius R_{S} aufweist, der größer ist als ein Kernradius R_{E} des Schaftes 2 im Bereich 2b des Gewindes 3. Im kopfnahen Bereich 2a sind die Fräsrippen 106 jeweils mit dem Schaft 2 verbunden, wodurch eine hohe mechanische Stabilität der Fräsrippen 106 gewährleistet ist.

Der Bereich 105 der Auflagefläche 4, in dem die Fräsrippen 106 angeordnet sind, ist hinsichtlich seiner axialen Länge H_{F} nicht größer als etwa 60 Prozent einer axialen Länge H_{A} der konisch zulaufenden Auflagefläche 4. Hinzu kommt eine axiale Länge H_{T} im kopfnahen Bereich 2a, die etwa ein Drittel der axialen Länge H_{F} in der Auflagefläche 4 liegenden Bereiches 105 betragen kann. So wirken die Fräsrippen 106 vorteilhafterweise erst dann, wenn der Kopf 1 der erfindungsgemäße Senkkopfschraube beginnt, in das Material einzudringen. Eine Materialzerstörung im Sinne eines Splitterns, Reißens oder einer unerwünschten Verformung wird dadurch verhindert.

Die Fräsrippen 106 können - wie dargestellt - hinsichtlich ihrer Längserstreckung L_{F} auf Mantellinien der Auflagefläche 4 verlaufen, deren Projektion auf einen durch den Kopf 1 verlaufenden Abschnitt der Schraubenlängsachse X-X der erfindungsgemäßen Schraube fällt. Auf diese Weise ist die Fräs- bzw. Schabwirkung, die die Fräsrippen 106 auf das Material ausüben, besonders groß.

Die Fräsrippen 106 können sich in einer hinsichtlich ihres Wirksamwerdens optimalen Anordnung - in der Unteransicht bzw. in der in Fig. 2 dargestellten Schnittdarstellung gesehen - in einem Ringbereich erstrecken, der außenseitig etwa durch den Außenradius A des Gewindes 3 und innenseitig etwa durch den äußeren Radius R_{S} des Schaftes 2 im kopfnahen Bereich 2a begrenzt ist.

Dabei ist es außerdem von Vorteil, wenn die Fräsrippen 106 über ihre Längserstreckung L_{F} eine veränderliche Höhe H_{RF} aufweisen. In der gezeigten Darstellung steigt die Höhe H_{RF} der Fräsrippen 106 über der Längserstreckung L_{F} der Fräsrippen 106 außenseitig beginnend von einem Wert Null relativ zur Auflagefläche 4 zunächst an und verläuft dann relativ zur Auflagefläche 4 etwa konstant. Dadurch wird eine gleichmäßige Fräswirkung über die Längserstreckung L_{F} der Fräsrippen 106 erreicht. Der Maximalwert der Höhe H_{RF} der Fräsrippen 106 relativ zur Auflagefläche 4 kann dabei günstigerweise, insbesondere bei einem äußeren Radius R_{K} des Kopfes 1 von etwa 4 bis 5 mm, etwa 0,3 mm betragen.

Eine optimale Formgestaltung der Fräsrippen 106 liegt vor, wenn diese - wie die Zeichnung veranschaulicht - jeweils in ihrem Grundriß etwa die Form eines Kreissegments aufweisen, wobei eine in Einschraubrichtung E weisende Kante 106a des Kreissegments flach oder konkav ausgebildet ist.

Die Erfindung ist nicht auf die beschriebenen Ausführungsbeispiele beschränkt, sondern umfaßt auch alle im Sinne der Erfindung gleichwirkenden Ausführungen. Beispielsweise kann die Anzahl, Form und Anordnung der Bremsrippen 6 von der beschriebenen Ausführung abweichen. So kann es unter Umständen angebracht sein, daß die Bremsrippen 6 nicht - wie dargestellt - hinsichtlich ihrer Längserstreckung L_{R} auf Mantellinien der Auflagefläche 4 verlaufen, deren Projektion P auf einen durch den Kopf 1 verlaufenden Abschnitt der Schraubenlängsachse X-X der erfindungsgemäßen Schraube fällt, sondern (ähnlich wie das Gewinde 3) auf einer zumindest teilweise in Umfangsrichtung verlaufenden schraubenlinieförmigen Bahn liegen.

### Bezugszeichen

- 1: Kopf
- 2: Schaft
- 2a: kopfnaher Bereich von 2
- 3: Gewinde
- 4: Auflagefläche von 1
- 5: oberer Bereich von 4
- 5a: erster Konvergenzbereich von 4 (Winkel α)
- 5b: erster Konvergenzbereich von 4 (Winkel β)
- 6: Bremsrippe
- 6a, 6b: Seitenflächen von 6
- 6c: Kante zwischen 6a und 6b
- 7: Gewindekante von 3
- 8: Endbereich von 3

- 105: unterer Bereich von 4
- 106: Fräsrippe
- 106a: Kante von 106

- A: Außenradius von 3 (Abstand von 7 zu X-X)
- E: Eindrehrichtung
- H_{A}: axiale Länge von 4
- H_{B}: axiale Länge von 5
- H_{F}: axiale Länge von 105 im Bereich von 4
- H_{K}: Höhe von 7
- H_{RB}: Höhe von 6
- H_{RF}: Höhe von 106
- H_{T}: axiale Länge von 105 im Bereich von 2a
- L_{F}: Längserstreckung von 106
- L_{R}: Längserstreckung von 6
- P: Projektion von 6 auf X-X
- R_{E}: Kernradius von 2
- R_{K}: äußerer Radius von 1
- R_{S}: Radius von 2 in 2a
- X-X: Schraubenlängsachse (durch 1 und 2)

- α: Konvergenzwinkel von 5a
- β: Konvergenzwinkel von 5b

## Patentansprüche

1. Senkkopfschraube mit einem Kopf (1), mit einem Schaft (2) und mit einem sich zumindest teilweise über den Schaft (2) erstreckenden Gewinde (3), wobei der Kopf (1) eine zumindest abschnittsweise in Richtung auf den Schaft (2) konisch zulaufende Auflagefläche (4) aufweist, wobei in einem oberen, dem Schaft (2) abgewandten Bereich (5) der Auflagefläche (4) Rippen (6) angeordnet sind,
**dadurch gekennzeichnet, daß** die Rippen (6) als Bremsrippen (6) derart ausgebildet sind, daß sie beim Eindrehen in ein Material, wie das einer Metalloberfläche eines Beschlags, durch eine erhöhte Flächenpressung zwischen dem Kopf (1) und dem Material den Reibwiderstand erhöhen, wobei eine spanende Wirkung sowohl beim Ein- als auch beim Herausdrehen jedoch weitestgehend ausgeschlossen ist.

2. Senkkopfschraube nach Anspruch 1,
**dadurch gekennzeichnet, daß** der Bereich (5) der Auflagefläche (4), in dem die Bremsrippen (6) angeordnet sind, hinsichtlich seiner axialen Länge (H_{B}) nicht größer ist als etwa 60 Prozent einer axialen Länge (H_{A}) der konisch zulaufenden Auflagefläche (4).

3. Senkkopfschraube nach Anspruch 1 oder 2,
**dadurch gekennzeichnet, daß** die Bremsrippen (6) hinsichtlich ihrer Längserstreckung (L_{R}) auf Mantellinien der Auflagefläche (4) verlaufen, deren Projektion (P) auf einen durch den Kopf (1) verlaufenden Abschnitt der Schraubenlängsachse (X-X) fällt .

4. Senkkopfschraube nach einem der Ansprüche 1 bis 3,
**dadurch gekennzeichnet, daß** das Gewinde (3) eine Gewindekante (7) aufweist, die über den Schaft (2), zumindest abschnittsweise, mit konstantem Außenradius (A) verläuft, wobei sich die Bremsrippen (6) in der Unteransicht gesehen in einem Ringbereich erstrecken, der außenseitig etwa durch einen äußeren Radius (R_{K}) des Kopfes (1) und innenseitig etwa durch den Außenradius (A) begrenzt ist.

5. Senkkopfschraube nach einem der Ansprüche 1 bis 4,
**dadurch gekennzeichnet, daß** die Bremsrippen (6) jeweils zwei Seitenflächen (6a, 6b) von konvexer Form, insbesondere der Form eines Diskussegments, aufweisen, wobei die Seitenflächen (6a, 6b) an einer, insbesondere zentrisch liegenden Kante (6c) aneinandergrenzen.

6. Senkkopfschraube nach einem der Ansprüche 1 bis 5,
**dadurch gekennzeichnet, daß** die Bremsrippen (6) über ihre Längserstreckung (L_{R}) eine veränderliche Höhe (H_{RB}) aufweisen.

7. Senkkopfschraube nach Anspruch 6,
**dadurch gekennzeichnet, daß** die Höhe (H_{RB}) der Bremsrippen (6) über der Längserstrekkung (L_{R}) der Bremsrippen (6) von einem Wert Null relativ zur Auflagefläche (4) ausgehend bogenförmig verläuft und bei einem Wert Null relativ zur Auflagefläche (4) endet.

8. Senkkopfschraube nach einem der Ansprüche 1 bis 7,
**dadurch gekennzeichnet, daß** der Maximalwert der Höhe (H_{RB}) der Bremsrippen (6) relativ zur Auflagefläche (4), insbesondere bei einem äußeren Radius (R_{K}) des Kopfes (1) von etwa 4 bis 5 mm, etwa 0,1 bis 0,2 mm beträgt.

9. Senkkopfschraube nach einem der Ansprüche 1 bis 8,
**gekennzeichnet durch** zwei bis sechs, insbesondere vier, Bremsrippen (6).

10. Senkkopfschraube nach einem der Ansprüche 1 bis 9,
**dadurch gekennzeichnet, daß** die konisch in Richtung auf den Schaft (2) zulaufende Auflagefläche (4) in einem ersten, dem Schaft abgewandten Kopfabschnitt (5a) unter einem Winkel (α) von etwa 90° und in einem zweiten, dem Schaft zugewandten Kopfabschnitt (5b) unter einem Winkel (β) von etwa 50° bis 65° konvergiert.

11. Senkkopfschraube nach Anspruch 10,
**dadurch gekennzeichnet, daß** die Bremsrippen (6) in dem dem Schaft (2) abgewandten ersten Kopfabschnitt (5a) angeordnet sind.

12. Senkkopfschraube nach einem der Ansprüche 1 bis 11,
**dadurch gekennzeichnet, daß** in einem unteren, dem Schaft (2) zugewandten Bereich (105) der Auflagefläche (4) Fräsrippen (106) angeordnet sind.

13. Senkkopfschraube nach Anspruch 12,
**dadurch gekennzeichnet, daß** der Bereich (105) der Auflagefläche (4), in dem die Fräsrippen (106) angeordnet sind, hinsichtlich seiner axialen Länge (H_{F}) nicht größer ist als etwa 60 Prozent einer axialen Länge (H_{A}) der konisch zulaufenden Auflagefläche (4) .

14. Senkkopfschraube nach Anspruch 12 oder 13,
**dadurch gekennzeichnet, daß** die Fräsrippen (106) auf Mantellinien der Auflagefläche (4) verlaufen, deren Projektion auf einen durch den Kopf (1) verlaufenden Abschnitt der Schraubenlängsachse (X-X) fällt.

15. Senkkopfschraube nach einem der Ansprüche 12 bis 14,
**dadurch gekennzeichnet, daß** sich die Fräsrippen (106) in der Unteransicht gesehen in einem Ringbereich erstrecken, der außenseitig etwa durch den Außenradius (A) des Gewindes (3) und innenseitig etwa durch einen äußeren Radius (R_{S}) des Schaftes (2) begrenzt ist.

16. Senkkopfschraube nach einem der Ansprüche 12 bis 15,
**dadurch gekennzeichnet, daß** die Fräsrippen (106) in ihrem Grundriß etwa die Form eines Kreissegments aufweisen, wobei eine in Einschraubrichtung (E) weisende Kante (106a) des Kreissegments flach oder konkav ausgebildet ist.

17. Senkkopfschraube nach einem der Ansprüche 12 bis 16,
**dadurch gekennzeichnet, daß** die Fräsrippen (106) über ihre Längserstreckung (L_{F}) eine veränderliche Höhe (H_{RF}) aufweisen.

18. Senkkopfschraube nach Anspruch 17,
**dadurch gekennzeichnet, daß** die Höhe (H_{RF}) der Fräsrippen (106) über der Längserstrekkung (L_{F}) der Fräsrippen (106) außenseitig beginnend von einem Wert Null relativ zur Auflagefläche (4) ausgehend zunächst ansteigt und dann relativ zur Auflagefläche (4) etwa konstant verläuft.

19. Senkkopfschraube nach einem der Ansprüche 12 bis 18,
**dadurch gekennzeichnet, daß** der Maximalwert einer/der Höhe (H_{RF}) der Fräsrippen (106) relativ zur Auflagefläche (4), insbesondere bei einem äußeren Radius (R_{K}) des Kopfes (1) von etwa 4 bis 5 mm, etwa 0,3 mm beträgt.

20. Senkkopfschraube nach einem der Ansprüche 12 bis 19,
**gekennzeichnet durch** vier bis acht, insbesondere sechs, Fräsrippen (106).

21. Senkkopfschraube nach einem der Ansprüche 12 bis 20,
**dadurch gekennzeichnet, daß** die Fräsrippen (106) in dem dem Schaft (2) zugewandten zweiten Kopfabschnitt angeordnet sind.

## Claims

1. Countersunk head screw with a head (1), with a shank (2) and with a thread (3) extending at least partially over the shank (2), whereby the head (1) has a contact surface (4) running conically at least in sections towards the shank (2), whereby fins (6) are arranged in an upper area (5) of the contact surface (4) away from the shank (2),
**characterized in that** the fins (6) are designed as braking fins (6) so that when screwing into a material, such as that of a metal surface of a fitting, they increase the frictional resistance due to increased surface pressure between the head (1) and the material, a metal-cutting effect however being very largely eliminated both when screwing in and screwing out.

2. Countersunk head screw according to Claim 1,
**characterized in that** the area (5) of the contact surface (4), in which the braking fins (6) are arranged, as regards its axial length (H_{B}) is not greater than about 60 per cent of an axial length (H_{A}) of the conically tapering contact surface (4).

3. Countersunk head screw according to Claim 1 or 2,
**characterized in that** the braking fins (6) as regards their longitudinal extension (L_{R}) run on surface lines of the contact surface (4), the projection (P) of which falls on a section of the screw's longitudinal axis (X-X) running.through the head (1).

4. Countersunk head screw according to one of Claims 1 to 3,
**characterized in that** the screw thread (3) has a thread edge (7), which runs over the shank (2), at least in sections, with constant outside radius (A), whereby the braking fins (6) seen from below extend in an annular area, which on the outside is roughly bounded by an outer radius (R_{K}) of the head (1) and on the inside roughly by the outside radius (A).

5. Countersunk head screw according to one of Claims 1 to 4,
**characterized in that** the braking fins (6) each have two side surfaces (6a, 6b) of convex shape, in particular of the shape of a disk surface, whereby the side surfaces (6a, 6b) adjoin each other at an, in particular centrally lying edge (6c) .

6. Countersunk head screw according to one of Claims 1 to 5,
**characterized in that** the braking fins (6) have a varying height (H_{RB}) over their longitudinal extension (L_{R}).

7. Countersunk head screw according to Claim 6,
**characterized in that** the height (H_{RB}) of the braking fins (6) over the longitudinal extension (L_{R}) of the braking fins (6) runs starting arc-shaped from a value of zero relative to the contact surface (4) and ends with a value of zero relative to the contact surface (4).

8. Countersunk head screw according to one of Claims 1 to 7,
**characterized in that** the maximum value of the height (H_{RB}) of the braking fins (6) relative to the contact surface (4), in particular with an outer radius (R_{K}) of the head (1) of some 4 to 5 mm, is about 0.1 to 0.2 mm.

9. Countersunk head screw according to one of Claims 1 to 8,
**characterized by** two to six, in particular four, braking ribs (6).

10. Countersunk head screw according to one of Claims 1 to 9,
**characterized in that** the contact surface (4) tapering conically towards the shank (2) converges in a first section of the head (5a) away from the shank at an angle (α) of about 90° and in a second section of the head (5b) towards the shank at an angle (β) of some 50° to 65°.

11. Countersunk head screw according to Claim 10,
**characterized in that** the braking fins (6) are arranged in the first section of the head (5a) away from the shank (2).

12. Countersunk head screw according to one of Claims 1 to 11, **characterized in that** cutting fins (106) are arranged in the lower area (105) of the contact surface (4) towards the shank (2).

13. Countersunk head screw according to Claim 12,
**characterized in that** the area (105) of the contact surface (4), in which the cutting fins (106) are arranged, as regards axial length (H_{F}) is not more than about 60 per cent of an axial length (H_{A}) of the conically tapering contact surface (4).

14. Countersunk head screw according to Claim 12 or 13,
**characterized in that** the cutting fins (106) run on centre lines of the contact surface (4), the projection of which falls on a section of the screw's longitudinal axis (X-X) running through the head (1).

15. Countersunk head screw according to one of Claims 12 to 14, **characterized in that** the cutting fins (106) seen from below extend in an annular area, which is bounded on the outside roughly by the outside radius (A) of the thread (3) and on the inside by an outer radius (R_{E}) of the shank (2).

16. Countersunk head screw according to one of Claims 12 to 15, **characterized in that** the cutting fins (106) in their plan view have roughly the shape of the segment of a circle, whereby an edge (106a) of the segment pointing in the direction of insertion (E) is made flat or concave.

17. Countersunk head screw according to one of Claims 12 to 16, **characterized in that** the cutting fins (106) have a variable height (H_{RF}) over their longitudinal extension (L_{F}).

18. Countersunk head screw according to Claim 17,
**characterized in that** the height (H_{RF}) of the cutting fins (106) over the longitudinal extension (L_{F}) of the cutting fins (106) on the outside beginning from a value of zero relative to the contact surface (4) rises at first and then runs roughly constantly relative to the contact surface (4) .

19. Countersunk head screw according to one of Claims 12 to 18, **characterized in that** the maximum value of a/the height (H_{RF}) of the cutting fins (6) relative to the contact surface (4), in particular with an outer radius (R_{K}) of the head (1) from about 4 to 5 mm is about 0.3 mm.

20. Countersunk head screw according to one of Claims 12 to 19, **characterized by** four to eight, in particular six, cutting fins (106) .

21. Countersunk head screw according to one of Claims 12 to 20, **characterized in that** the cutting fins (106) are arranged in the second head section towards the shank (2).

## Revendications

1. Vis à tête fraisée possédant une tête (1), une tige (2) et un filetage (3) s'étendant
au moins partiellement sur la tige (2), la tête (1) présentant une surface de portée (4) s'étendant avec une forme conique, du moins par segments, en direction de la tige (2), des nervures (6) étant prévues dans une région supérieure (5) de la surface de portée (4) qui est éloignée de la tige (2),
**caractérisée en ce que** les nervures (6) sont réalisées sous la forme de nervures de frein (6) de telle manière que, lorsqu'elles pénètrent lors du vissage dans une matière comme la surface métallique d'une ferrure, elles augmentent la résistance de frottement par un accroissement de la pression superficielle entre la tête (1) et la matière, cependant que toute action d'enlèvement de copeaux est exclue dans une très large mesure aussi bien lors du vissage que lors du dévissage.

2. Vis à tête fraisée selon la revendication 1,
**caractérisée en ce que** la région (5) de la surface de portée (4) dans laquelle les nervures de frein (6) sont disposées n'est pas supérieure en longueur axiale (H_{B}) à environ 60 % d'une longueur axiale (H_{A}) de la surface de portée (4) s'étendant avec une forme conique.

3. Vis à tête fraisée selon la revendication 1 ou 2,
**caractérisée en ce que** les nervures de frein (6) s'étendent, en ce qui concerne leur extension longitudinale (L_{R}) sur des génératrices de la surface de portée (4) dont la projection (P) tombe sur un segment de l'axe longitudinal (X-X) de la vis qui passe à travers la tête (1).

4. Vis à tête fraisée selon l'une des revendications 1 à 3,
**caractérisée en ce que** le filetage (3) présente une arête de filet (7) qui s'étend sur la tige (2), du moins par segments, avec un rayon extérieur (A) constant, les nervures de frein (6) s'étendant, en vue de dessous, dans une région annulaire qui est limitée, extérieurement, à peu près par un rayon extérieur (R_{K}) de la tête (1) et, intérieurement, à peu près par le rayon extérieur (A).

5. Vis à tête fraisée selon l'une des revendications 1 à 4,
**caractérisée en ce que** les nervures de frein (6) présentent chacune deux surfaces latérales (6a, 6b) de forme convexe, en particulier de la forme d'un segment de disque, les surfaces latérales (6a, 6b) se rejoignant le long d'une arête (6c) en particulier centrale.

6. Vis à tête fraisée selon l'une des revendications 1 à 5,
**caractérisée en ce que** les nervures de frein (6) présentent une hauteur (H_{RB}) variable sur leur extension longitudinale (L_{R}).

7. Vis à tête fraisée selon la revendication 6,
caractérisée en que, sur l'extension longitudinale (L_{R}) des nervures de frein (6), la hauteur (H_{RB}) des nervures de frein (6) forme un profil en arc de cercle en partant d'une valeur nulle relativement à la surface de portée (4) et elle se termine à une valeur nulle relativement à la surface de portée (4).

8. Vis à tête fraisée selon l'une des revendications 1 à 7,
**caractérisée en ce que** la valeur maximale de la hauteur (H_{RB}) des nervures de frein (6) relativement à la surface de portée (4) vaut environ 0,1 à 0,2 mm, en particulier dans le cas d'un rayon extérieur (R_{K}) de la tête (1) de la vis d'environ 4 à 5 mm.

9. Vis à tête fraisée selon l'une des revendications 1 à 8,
**caractérisée par** deux à six, en particulier quatre, nervures de frein (6).

10. Vis à tête fraisée selon l'une des revendications 1 à 9,
**caractérisée en ce que** la surface de portée (4) qui s'étend avec une forme conique en direction de la tige (2) converge sous un angle (α) d'environ 90 ° dans un premier segment de tête (5a) qui est éloigné de la tige et sous un angle (β) d'environ 50 ° à 65 ° dans un deuxième segment de tête (5b) qui est dirigé vers la tige.

11. Vis à tête fraisée selon la revendication 10,
**caractérisée en ce que** les nervures de frein (6) sont disposées dans le premier segment de tête (5a) qui est éloigné de la tige (2).

12. Vis à tête fraisée selon l'une des revendications 1 à 11,
**caractérisée en ce que** des nervures de fraisage (106) sont disposées dans une région inférieure (105) de la surface de portée (4) qui est dirigée vers la tige (2).

13. Vis à tête fraisée selon la revendication 12,
**caractérisée en ce que**, en ce qui concerne sa longueur axiale (H_{F}), la région (105) de la surface de portée (4) dans laquelle les nervures de fraisage (106) sont disposées n'est pas supérieure à environ 60 pourcent d'une longueur axiale (H_{A}) de la surface de portée (4) s'étendant avec une forme conique.

14. Vis à tête fraisée selon la revendication 12 ou 13,
**caractérisée en ce que** les nervures de fraisage (106) s'étendent sur des génératrices de la surface de portée (4) dont la projection tombe sur un segment de l'axe longitudinal (X-X) de la vis qui passe à travers la tête (1).

15. Vis à tête fraisée selon l'une des revendications 12 à 14,
**caractérisée en ce que**, vues en vue de dessous, les nervures de fraisage (106) s'étendent dans une région annulaire qui est limitée, extérieurement, à peu près par le rayon extérieur (A) du filetage (3) et, intérieurement, à peu près par un rayon extérieur (R_{S}) de la tige (2).

16. Vis à tête fraisée selon l'une des revendications 12 à 15,
**caractérisée en ce que**, en plan, les nervures de fraisage (106) présentent à peu près la forme d'un segment de cercle, une arête (106a) du segment de cercle qui pointe dans la direction du vissage (E) étant plate ou concave.

17. Vis à tête fraisée selon l'une des revendications 12 à 16,
**caractérisée en ce que** les nervures de fraisage (106) présentent une hauteur (H_{RF}) qui varie sur leur extension longitudinale (L_{F}).

18. Vis à tête fraisée selon la revendication 17,
**caractérisée en ce que**, sur l'extension longitudinale (L_{F}) des nervures de fraisage (106), la hauteur (H_{RF}) des nervures de fraisage (106) s'accroît tout d'abord sur le côté extérieur, en commençant à une valeur nulle relativement à la surface de portée (4), puis reste à peu près constante relativement à la surface de portée (4).

19. Vis à tête fraisée selon l'une des revendications 12 à 18,
**caractérisée en ce que** la valeur maximale d'une hauteur ou de la hauteur (H_{RF}) des nervures de fraisage (106) relativement à la surface de portée (4) vaut environ 0,3 mm, en particulier dans le cas d'un rayon extérieur (R_{K}) de la tête (1) d'environ 4 à 5 mm.

20. Vis à tête fraisée selon l'une des revendications 12 à 19,
**caractérisée par** quatre à huit, en particulier six, nervures de fraisage (106).

21. Vis à tête fraisée selon l'une des revendications 12 à 20,
**caractérisée en ce que** les nervures de fraisage (106) sont disposées dans le deuxième segment de la tête, qui est dirigé vers la tige (2).
